# EUROPÄISCHE PATENTANMELDUNG

(11) **EP 0 544 111 A1**
(43) Veröffentlichungstag der Anmeldung: **02.06.1993**
(21) Anmeldenummer: 92118338.0
(22) Anmeldetag: 27.10.1992
(51) Int. Cl.: G01L 5/00, B41F 33/00

(54) **Anpressdruckmessgerät für Walzen- und Greifersysteme**

(30) Priorität: 29.10.1991 DE 4135537
(71) Anmelder: Preiss, Harald, D-83684 Tegernsee (DE); Fallecker, Wolfgang, D-83700 Rottach-Egern (DE)
(72) Erfinder: Preiss, Harald, D-83684 Tegernsee (DE); Fallecker, Wolfgang, D-83700 Rottach-Egern (DE)

(57) **Zusammenfassung**

Der Anpreßdruck zweier Walzen [1] mit Zeilenberührung oder zweier geschlossener Greiferzangen [6] sollte exakt und reproduzierbar gemessen werden. Um die Meßgenauigkeit zu erhöhen und um das Meßelement [2] möglichst einfach fertigen zu können, sollte der Anpreßdruck nicht in eine mechanische Zwischengröße umgesetzt werden, sondern direkt elektrisch meßbar sein.

Auf einen Blechstab [4] wird an einem Ende ein Meßelement aufgeklebt, das druckempfindlich und dünn genug ist, um zwischen die Walzen oder die Greiferzangen geschoben werden zu können. Der Blechstab ist mit einer Anschlagwalze [3] versehen, der sicherstellt, daß bei jeder Neueinstellung der Anpreßdruck an der selben Stelle des Meßelements wirkt. Der Meßwert wird in einem Zahlenwert an einem Anzeigeinstrument [5] wiedergegeben. Dieser Zahlenwert wird bei Neueinstellungen wieder eingestellt, um den selben Anpreßdruck zu erreichen.

Ein hauptsächliches Anwendungsgebiet des Anpreßdruckmeßgerätes ist die Einstellung der Walzen zur Farbführung oder der Greiferzangen zum Papiertransport in Druckmaschinen.

## Beschreibung

### Technisches Anwendungsgebiet

Das Anpreßdruckmeßgerät gemäß dem Oberbegriff des Anspruch 1 dient zur Messung des anliegenden Anpreßdrucks zweier Walzen mit Zeilenberührung, oder zweier geschlossener Greiferzangen. Das Meßgerät dient nicht zur Ermittlung des physikalischen Wert des Anpreßdrucks (z.B. 1 kg/m²), sondern ermöglicht es, den eingestellten Anpreßdruck zu erfassen, und bei einer späteren Neueinstellung exakt wiederherzustellen.

Die Einstellung des Walzenanpreßdrucks muß beispielsweise nach dem Einsetzen von Walzen in Druckmaschinen, oder nach einer bestimmten Anzahl von Betriebsstunden der Druckmaschine durchgeführt werden. Dabei wird durch Verstellen entsprechender Stellschrauben der Abstand einer beweglichen Walze zu einer festen Walze verändert.

Der eingestellte Abstand und der damit erzeugte Anpreßdruck zweier Walzen ist maßgeblich für das Druckergebnis. So wird beispielsweise im Farbwerk der Druckmaschine der Transport der Farbe zu den Farbauftragswalzen und die gleichmäßige Farbverteilung, bzw. -verreibung durch ein aufeinander abgestimmtes Walzensystem sichergestellt.

Ist dabei der Anpreßdruck zweier aneinanderliegenden Walzen zu hoch, so kann die Farbe nicht mehr ausreichend zwischen den Walzen hindurchgeführt werden. Die Farbe staut sich an der Walze und der Farbtransport wird reduziert oder unterbrochen.

Wird der Anpreßdruck an einem Ende der Walze höher eingestellt, als am anderen Ende, so ergibt sich eine ungleichmäßige Farbverteilung auf der Walze (Die bewegliche Walze kann an beiden Aufhängungen verstellt werden).

Bei zu geringem Anpreßdruck zwischen den Walzen wird dagegen zuviel Farbe übergeben und dadurch ebenfalls ein nicht zufriedenstellendes Druckergebnis erzielt.

Das Greifersystem ist für den Papiertransport in der Druckmaschine zuständig. Dazu nimmt der Greifer das Papier mit den Greiferzangen auf und befördert es an die nächste vorgesehene Stelle in der Druckmaschine. Der eingestellte Anpreßdruck, mit dem die Greiferzangen zupacken, ist auch hier für den Erfolg des Papiertransports maßgeblich und muß regelmäßig überprüft werden. Wird das Papier zu leicht, also mit zu geringem Anpreßdruck gehalten, so kann es beim Transport verrutschen und dadurch nicht mehr in die gewünschte Position gebracht werden. Bei zu hohem Anpreßdruck der Greiferzangen kann das Papier beim Zupacken des Greifers mit Druckstellen versehen werden oder auch einreißen.

### Stand der Technik

Stand der Technik ist, den Anpreßdruck zweier Walzen mit Hilfe eines Meßelements, daß zwischen die Walzen eingeführt wird, zu erfassen und den ermittelten Meßwert in einem Zahlenwert wiederzugeben (U.S. Patent 3418850). Das dazu verwendete Meßelement verändert seinen ohmschen Widerstand mit dem anliegenden Anpreßdruck. Dieses Meßelement beinhaltet einen Widerstandsdraht, der um einen nicht leitenden Stab gewickelt ist. Der Widerstandsdraht ist an jeder Wicklung mit freiliegenden Kontaktstellen versehen. Durch den anliegenden Anpreßdruck wird eine elastisch befestigte Kontaktplatte auf diese Kontaktstellen gedrückt, wodurch Teile des Widerstandsdrahtes überbrückt werden. Die Anzahl der auf diese Weise überbrückten Wicklungen wird mit zunehmenden Anpreßdruck erhöht und somit der Gesamtwiderstand des Meßelements weiter verringert.

Der Anpreßdruck zweier geschlossener Zangen wird ebenfalls durch ein Meßelement erfaßt und als Zahlenwert wiedergegeben (U.S. Patent 3024648). Das dazu verwendete Meßelement verändert seine Induktivität mit dem anliegenden Anpreßdruck. In dem Meßelement werden zwei elastische flache Stäbe übereinanderliegend so angebracht, daß sie nur an zwei Stellen durch dazwischen befestigte Stifte verbunden sind. Diese Stifte wirken als Abstandshalter der beiden flachen elastischen Stäbe und sind quer an einem Ende und in der Mitte der Stäbe angebracht. Die beiden Stäbe werden so zwischen den Zangen eingebracht, daß der Anpreßdruck genau zwischen den beiden Abstandshaltern anliegt und somit die beiden Stäbe zueinander durchbiegt. Am anderen Ende der beiden Stäbe sind eine Spule und ein Eisenkern jeweils an einem Stab so befestigt, daß der Eisenkern in die Spule hineinragt. Werden nun durch Erhöhung des Anpreßdrucks die beiden Stäbe zwischen den Abstandshaltern zusammengedrückt, so wird durch die Hebelwirkung um den mittleren Abstandshalter der Abstand der beiden Stäbe am anderen Ende vergrößert. Dadurch wird der Eisenkern aus der Spule gezogen und die Induktivität der Spule verändert.

### Mängel der bisher bekannten Methoden

Beide aufgeführten Meßmethoden basieren auf der Wandlung des Drucks in eine mechanische Größe (elastische Durchbiegung oder Verformung) und anschließend in eine elektrisch meßbare Größe (elektrischer Widerstand, Induktivität). Durch diese Wandlung sind beide Messungen mit einem von der Fertigungsgenauigkeit der mechanischen Teile abhängigen Meßfehler behaftet. Außerdem wird in beiden Fällen die Meßgenauigkeit durch die nicht exakt reproduzierbare Messung weiter herabgesetzt, da der Anpreßdruck nach dem manuellen Einführen des Meßelements nicht bei jeder Messung an der exakt gleichen Stelle des Meßelements anliegt.

Beide Meßelemente müssen mit hochpräzisen feinmechanischen Komponenten ausgestattet sein, um ein möglichst genaues Meßergebnis zu erhalten. Die Fertigung dieser Teile ist somit aufwendig und mit relativ hohen Kosten verbunden.

### Problemstellung

Es wurde nach einer weiteren Methode gesucht, die es ermöglicht, den eingestellten Anpreßdruck meßtechnisch zu erfassen, um die einmal gefundene korrekte Einstellung der Walzen- und Greifersysteme reproduzierbar zu machen. Um die Meßgenauigkeit zu erhöhen, sollte die Wandlung in eine mechanische Zwischengröße wegfallen. Dadurch sollte auch die aufwendige Fertigung von mechanischen Komponenten des Meßelements vermieden werden.

Außerdem sollte der Meßvorgang ein exakt reproduzierbares Meßergebnis liefern, welches bei einfacher Bedienung erreicht werden kann.

### Problemlösung

Die Problemlösung erfolgt durch die Maßnahmen im kennzeichnenten Teil des Anspruchs 1. Die meßtechnische Erfassung des Anpreßdrucks erfolgt dabei durch ein Meßelement, das zwischen die beiden zusammengepreßten Teile eingeschoben werden kann und somit den dann anliegenden Anpreßdruck von außen elektrisch meßbar macht.

Dieses Meßelement darf nicht dicker als ca. 1mm sein, um zwischen die beiden Walzen (Eine Gummi- und eine Stahlwalze) geschoben werden zu können, ohne daß dabei die Walzen oder das Meßelement selbst beschädigt wird. Die Messung des Anpreßdrucks der beiden Greiferzangen muß ebenfalls bei möglichst geringem Abstand der beiden Zangen zueinander durchgeführt werden, da dieser Anpreßdruck durch Federn erzeugt wird. Beim Öffnen der Greiferzangen ändert sich die Auslenkung der Federn und damit auch die erzeugte Federspannung, bzw. der sich daraus ergebende Anpreßdruck.

Folgende erfindungsgemäße Ausführungsarten für das Meßelement wurden unter Berücksichtigung der angegebenen Bedingungen ermittelt:
1. Ein Piezoelement wird am Ende eines dünnen Blechstabes aufgeklebt und zwischen die beiden Walzen, oder die Greiferzangen geschoben. Dieses Meßelement wandelt den anliegenden Anpreßdruck in ein Spannungssignal um. Das erzeugte Spannungssignal muß durch eine Spannungsverstärkerstufe mit sehr hochohmigen Eingangswiderstand oder einen Ladungsverstärker verstärkt werden, um eine Entladung des Piezoelements zu vermeiden, bzw. zu verzögern.
2. Ein Dehnmeßstreifen wird am Ende eines dünnen Blechstabes aufgeklebt, um ebenfalls zwischen die beiden Walzen oder die Greiferzangen geschoben werden zu können. Dieses Meßelement verändert unter dem anliegenden Anpreßdruck seinen ohmschen Durchgangswiderstand. Zur Messung kleinere Anpreßdrücke (0 bis einige bar) eignen sich besonders Meßstreifen auf Halbleiterbasis (z.B. Halbleiter-Dehnmeßstreifen). Durch eine von außen an den Dehnmeßstreifen angelegte Spannungsquelle wird die Änderung des Anpreßdrucks mit dem resultierenden Strom erfaßt. Dieser Strom wird durch eine Operationsverstärkerschaltung in ein Spannungssignal umgewandelt.
3. Ein Plattenkondensator wird am Ende eines dünnen Blechstabes aufgeklebt, um zwischen die beiden Walzen oder die Greiferzangen geschoben werden zu können. Dabei wirkt der anliegende Anpreßdruck senkrecht zur Plattenfläche. Wird der Anpreßdruck verändert, so wirkt sich dies auf den Abstand der beiden Kondensatorplatten zueinander und auf die Dielektrizitätskonstante des Kondensators aus. Durch die Wahl der Materialien können diese beiden Auswirkungen unterschiedlich gewichtet werden. In beiden Fällen wird jedoch die Kapazität des Plattenkondensators verändert, welche somit den Anpreßdruck wiedergibt. Die Kapazität des Plattenkondensators wird ebenfalls von außen erfaßt und in ein Spannungssignal umgewandelt.

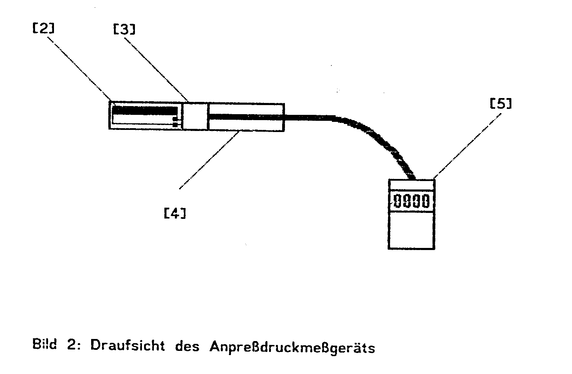

Das durch den Anpreßdruck direkt oder indirekt erzeugte elektrische Signal (Meßwert) wird durch zwei am Meßelement angelötete Drähte zum anderen Ende des Blechstabes weitergeleitet. Diese Drähte sind auf dem Blechstab aufgeklebt und führen von dort aus durch eine freie Leitung zu dem Anzeigeinstrument. Das Anzeigeinstrument besteht aus einem Gehäuse, einem Batteriefach, einem elektronischen Teil zur Signalverarbeitung, einer Digitalanzeige, sowie einem Ein-Ausschalter des Geräts (siehe Bild 2).

Am Gehäuse ist dabei nur die Digitalanzeige und der Ein- Ausschalter angebracht. Die im Batteriefach enthaltenen Batterien dienen zur elektrischen Versorgung sämtlicher Komponenten. Der elektronische Teil zur Signalverarbeitung wandelt die vom Anpreßdruck abhängige Größe (je nach Ausführungsart U, R, oder C) in ein Spannungssignal um, welches der Digitalanzeige als Eingangssignal bereitgestellt wird.

Durch eine an dem Blechstab befestigte (geschraubte oder genietete) Walze wird beim Einschieben des Blechs ein Anschlag erzeugt. Dieser Anschlag ist erforderlich, um bei jeder Messung des Anpreßdrucks das gleiche Belastungsprofil des Meßelements zu erhalten. Denn nur wenn die Walze oder der Greifer bei jeder Messung exakt an der gleichen Stelle des Meßelements aufsetzen, wird ein mit früheren Messungen vergleichbarer Meßwert erzeugt. Die Position der Anschlagwalze auf dem Blechstab hängt von der Ausführungsart des Meßelements ab. Es muß sichergestellt werden, daß nach dem Einschieben des Blechstabes die Walze oder der Greiferarm ordnungsgemäß auf das Meßelement aufsetzt.

Als Anschlag wurde eine Walze gewählt, da diese beim Einschieben des Blechs keine Verletzungen an der Walze oder an den Greiferzange erzeugen kann. Außerdem muß eine möglichst große Kontaktfläche zwischen Walze und Anschlageisen gegeben sein, um den Gummiüberzug der Walze (eine der beiden Walzen ist meistens mit Gummi überzogen) möglichst wenig einzudrücken.

### Ausführungsbeispiel

Als Ausführungsbeispiel wird der Einstellvorgang zweier Walzen zur Farbführung einer Druckmaschine beschrieben.

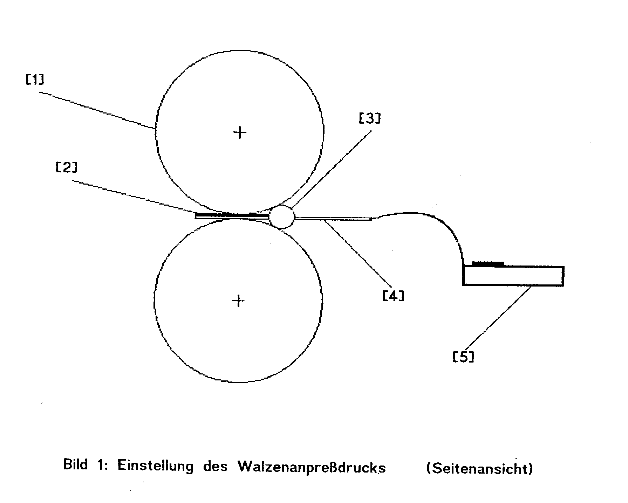

Bevor die Einstellung des Anpreßdrucks mit Hilfe des Einstellgeräts durchgeführt werden kann, muß der Anpreßdruck an einer bereits ordnungsgemäß eingestellten Walze erfaßt werden. Dieser an der Digitalanzeige angezeigte Zahlenwert dient als Bezugsgröße für zukünftige Einstellungen. Da der Anpreßdruck sämtlicher Walzen im Farbwerk identisch ist, muß diese Bezugsgröße nur an einer Walze ermittelt werden. Dazu wird der Blechstab mit dem Ende, an dem das Meßelement aufgeklebt ist, zwischen die Walzen geschoben. Dabei ist zu beachten, daß der Stab bis zum Anschlag geschoben wird, um immer das gleiche Belastungsprofil zu erhalten (siehe Bild 1). Der anliegende Anpreßdruck wird, nachdem das Gerät eingeschalten wurde, in einem Zahlenwert auf der Digitalanzeige wiedergegeben.

Ist dieser Zahlenwert einmal bekannt, so können alle späteren Neueinstellungen des Walzenanpreßdrucks mit Hilfe des Einstellgeräts durchgeführt werden. Dazu erfolgt die gleiche Handhabung des Geräts, wie bei der Ermittlung des ordnungsgemäßen Anpreßdrucks. Wurde das Meßelement zwischen die Walzen geschoben, so kann eine Abweichung des anliegenden Anpreßdrucks vom gewünschten Anpreßdruck nun direkt an der Digitalanzeige abgelesen werden. Das Meßelement bleibt auch während der Korrektur des Anpreßdrucks zwischen den Walzen stecken. Somit kann der Bediener die Einstellschrauben betätigen, bis der gewünschte Wert angezeigt wird.

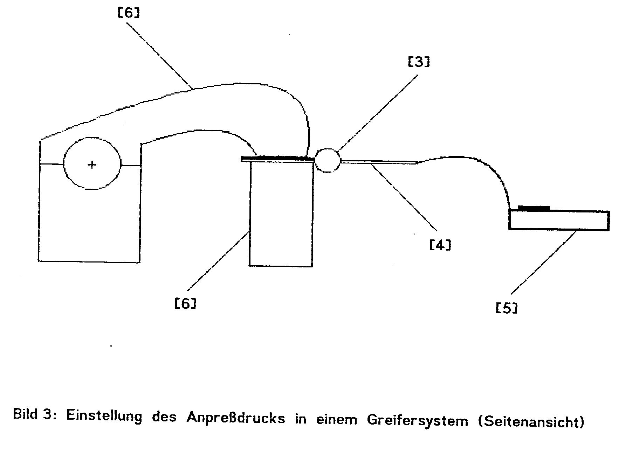

Die Einstellung des Greifersystems erfolgt nach dem gleichen Prinzip. Die ordnungsgemäße Einstellung wird mit dem Einstellgerät einmal erfaßt und bei den späteren Neueinstellung wiederhergestellt. Um den Blechstab mit dem Meßelement ordnungsgemäß zwischen die Greiferzangen positionieren zu können muß die bewegliche (gefederte) Greiferzange angehoben werden (siehe Bild 3).

### Vorteile der Erfindung

- Genaue Meßwerterfassung, da der Druck bei jedem der angegebenen Meßelemente direkt in eine elektrische Größe umgeformt wird.
- Der Meßvorgang ist exakt reproduzierbar, da der Anschlag sicherstellt, daß bei jeder Messung das Meßelement genau an der selben Stelle belastet wird und somit einen genau dem Anpreßdruck entsprechenden Meßwert liefert.
- Einfach und kostengünstig zu realisieren, da das Meßelement lediglich auf den Blechstab aufgeklebt wird und keine weiteren mechanischen Komponenten zur Meßwerterfassung erforderlich sind.

## Patentansprüche

1. Gerät zur Messung des Anpreßdrucks zweier Walzen mit Zeilenberührung oder zweier geschlossener Greiferzangen insbesondere bei Druckmaschinen,
dadurch gekennzeichnet,
daß auf einem zwischen die beiden Walzen bzw. Greiferzangen einschiebbaren Blechstab
ein Anschlag befestigt ist,
daß auf dem Blechstab
entweder ein Dehnmeßstreifen, bzw. Halbleiter-Dehnmeßstreifen,
oder ein Piezoelement,
oder ein Plattenkondensator,
geklebt ist,
daß bei der Messung eine der beiden Walzen bzw. Greiferzangen direkt auf die Oberfläche eines der genannten Meßelemente drückt und die gegenüberliegende Walze bzw. Greiferzange auf die Oberfläche des Blechstreifens drückt, und daß der ermittelte Meßwert durch einen Zahlenwert wiedergegeben wird.

2. Gerät nach Anspruch 1
dadurch gekennzeichnet,
daß der Anschlag eine auf dem Blechstab befestigte Walze ist.
